# EUROPÄISCHE PATENTSCHRIFT

(11) **EP 2 007 024 B1**
(45) Veröffentlichungstag und Bekanntmachung des Hinweises auf die Patenterteilung: **05.09.2018**
(21) Anmeldenummer: 08104270.7
(22) Anmeldetag: 05.06.2008
(51) Int. Cl.: H04B 5/00, H04R 25/00, H01Q 1/27, H01P 3/14

(54) **Anordnung von Geräten mit mindestens einem Sender und Verfahren zur Verbesserung der Empfangsfeldstärke**
Arrangement of devices with at least one transmitter and method of improving the reception field strength
Ensemble de dispositifs comprenant au moins un émetteur et procédé pour améliorer l'intensité de champ de réception

(30) Priorität: 20.06.2007 DE 102007028234; 21.06.2007 US 936615 P
(43) Veröffentlichungstag der Anmeldung: 24.12.2008
(73) Patentinhaber: Sivantos GmbH, 91058 Erlangen (DE)
(72) Erfinder: Rass, Uwe, 90480, Nürnberg (DE); Reithinger, Jürgen, 91077, Neunkirchen am Brand (DE)
(74) Vertreter: FDST Patentanwälte

(56) Entgegenhaltungen:
- EP-A1- 0 448 764
- DE-C1- 19 704 119
- JP-A- S5 612 101
- US-A- 4 144 510
- US-A1- 2004 119 650

## Beschreibung

Durch die fortschreitende Miniaturisierung elektronischer Geräte, insbesondere im Bereich der Informations- und Kommunikationstechnik und die ebenfalls fortschreitende Entwicklung im Bereich der drahtlosen Kommunikation zwischen solchen Geräten sind Anordnungen solcher Geräte, die miteinander kommunizieren und dadurch funktionell bei der Realisierung verschiedener Anwendungen zusammenwirken immer häufiger in den unterschiedlichsten Bereichen der Technik und ihrer Anwendung anzutreffen.

Beispielsweise bestehen moderne Hörhilfen oder Hörgerätesysteme heute vielfach aus einer Mehrzahl von Geräten, die am Körper des Trägers der Hörhilfe angeordnet sind und erst durch ihr funktionelles Zusammenwirken die gewünschte Funktion des Hörgerätesystems ermöglichen. Einige digitale Hörgerätesysteme sind mit Funktechnologie ausgestattet, mit der bei einer beidohrigen (binauralen) Versorgung beide Hörgeräte miteinander kommunizieren und sich synchron abstimmen. Somit ist dann sichergestellt, dass beide Geräte immer gleich eingestellt sind, wenn z. B. auf einer Seite das Hörprogramm gewechselt oder die Lautstärke variiert wird. Auch die Steuerung sog. adaptiver Parameter, also Algorithmen zur Erkennung von Störgeräuschen oder die Anpassung der Charakteristik von Richtmikrofonen, wird in beiden Hörsystemen synchronisiert und erhöht damit die Lokalisationsfähigkeit.

Bei typischen Vertretern solcher modular aufgebauten drahtlosen Hörgerätesysteme trägt der Anwender in oder hinter seinen Ohren je ein Hörgerät, welches drahtlos mit dem jeweils anderen Hörgerät und gegebenenfalls weiteren Zusatzgeräten in Verbindung steht. Diese Zusatzgeräte werden häufig ebenfalls am Körper des Hörgeräteträgers, typisch an einer Kordel um den Hals oder am Hosengürtel, getragen. Beispiele für solche Zusatzgeräte sind Programmiergeräte oder Schnittstellengeräte, mit denen beispielsweise der Anschluss externer Mikrofone, MP3-Player oder Rundfunkgeräten an das Hörsystem möglich ist.

Das Hörgerät wandelt dabei die vom Sender des Zusatzgeräts empfangenen elektromagnetischen Signale (z.B. Musiksignale) in akustische Signale, die im Falle sogenannter Hinter-dem-Ohr-Geräte über einen Schallschlauch mit Hilfe einer Otoplastik in das Ohr des Trägers eingekoppelt werden.

Auf anderen Gebieten der Technik und ihrer Anwendungen (z.B. Patientenüberwachung, Mobiltelefonie, Unterhaltungselektronik) bestehen ähnliche Situationen, die hier nicht näher erläutert werden müssen.

Das Dokument US 2004/0119650 A1 beschreibt eine passive Vorrichtung, die elektromagnetische Energie von einer Antenne eines Mobiltelefons auskoppelt, über ein Koaxialkabel ohne nennenswerte Verluste zu einer abgesetzten Antenne weiterführt und dort abstrahlt.

Aus dem Dokument DE 19704119 C1 ist eine Hörbrille mit zwei Hörgeräten bekannt, die über einen Lichtleiter und optische Sender und Empfänger gekoppelt sind.

Die Leistungsfähigkeit solcher und anderer am Körper eines Menschen tragbaren Anordnungen von miteinander drahtlos kommunizierenden Geräten hängt entscheidend von der Qualität der Funkverbindung oder eines anderen jeweils angewandten Verfah rens zur drahtlosen Kommunikation (induktive Kopplung, etc.) ab. Die dabei verwendeten Sendeleistungen und Feldstärken sind aus verschiedenen Gründen (Stromversorgung, Störung benachbarter Systeme) eher gering dimensioniert. Es kommt also auf eine technisch optimale Lösung der drahtlosen Kommunikation zwischen den Geräten an, die eine möglichst hohe Betriebssicherheit und Datenrate gewährleisten soll.

Der vorliegenden Erfindung liegt die Aufgabe zugrunde, zur technisch optimalen Lösung dieser Probleme beizutragen. Diese Aufgabe wird durch eine Anordnung oder ein Verfahren nach einem der Patentansprüche gelöst. Hierbei sind vorteilhafte Weiterbildungen der vorliegenden Erfindung Gegenstände von Unteransprüchen.

Im Folgenden wird die Erfindung anhand bevorzugter Ausführungsbeispiele und mit Hilfe von Figuren näher erläutert.

Dabei zeigt
Figur 1 in schematischer Weise ein erstes Ausführungsbeispiel oder eine erste Gruppe von Ausführungsbeispielen einer erfindungsgemäßen Anordnung mit beispielsweise zwei Geräten;
Figur 2 in schematischer Weise ein zweites Ausführungsbeispiel oder eine zweite Gruppe von Ausführungsbeispielen einer erfindungsgemäßen Anordnung mit beispielsweise drei Geräten.

Diese und weitere Ausführungsbeispiele der Erfindung werden nachstehend näher beschrieben. Dabei hat diese Beschreibung stets rein beispielhaften Charakter und soll den Anwendungsbereich der Erfindung in keiner Weise beschränken. Insbesondere wenn nachfolgend der Einfachheit und Klarheit der Darstellung wegen stets beispielhaft von Hörgerätesystemen die Rede ist, kann der Fachmann anhand dieser beispielhaften Beschreibung leicht erkennen, wie die Erfindung problemlos auf andere Anwendungen zu übertragen ist.

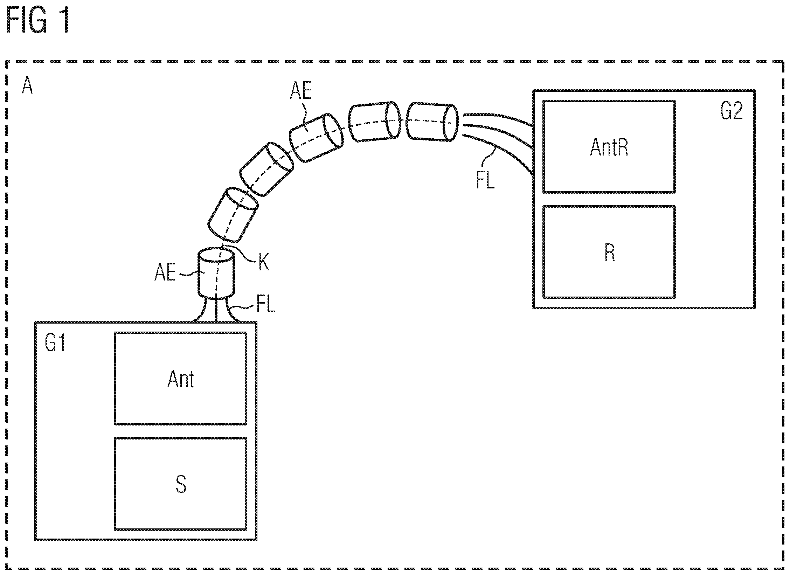

Wie unter anderem durch Figur 1 verdeutlicht werden kann, kann die vorliegende Erfindung durch eine am Körper eines Menschen tragbare Anordnung (A) von Geräten verwirklicht werden, die ein erstes Gerät (G1) zum senden von Signalen an wenigstens ein zweites Gerät (G2) über elektromagnetische Felder oder Wellen umfasst, wobei das erste Gerät (G1) einen Sender (S) zum senden von solchen Signalen und eine mit diesem Sender (S) verbundene Antenne (Ant) umfasst.

Ferner sieht die Erfindung eine von der Antenne (Ant) ausgehende linienhafte oder kettenartige, aber nicht notwendig geradlinige Anordnung (K) von Materialien vor, die den Verlauf der von der Antenne (Ant) ausgesendeten oder erzeugten elektromagnetischen Wellen oder Felder so beeinflussen, dass am Ort wenigstens eines zweiten Gerätes (G2) eine höhere Empfangsfeldstärke der vom Sender (S) ausgesendeten Signale herrscht als ohne diese Anordnung (K) von Materialien.

Mit der Ausdrucksweise "am Körper eines Menschen tragbare Anordnung" ist nicht notwendig gemeint, dass einige oder gar alle Teile dieser Anordnung in jedem Fall unmittelbaren Kontakt zum menschlichen Körper, insbesondere zu seiner Hautoberfläche oder zu Körperöffnungen wie dem Ohr, haben müssen. Dies kann zwar so sein, ist aber keineswegs zwingend. Unter diesen Begriff sollen im Zusammenhang mit der Beschreibung der vorliegenden Erfindung jedenfalls auch Ausführungsformen fallen, bei denen einige oder sämtliche Teile der Anordnung keinen unmittelbaren Kontakt zum Körper haben, sondern beispielsweise in Kleidungsstücke oder Ausstattungsgegenstände wie Schmuckstücke, Armbänder oder Armbanduhren, Gürtel, Halsbänder, Ohrringe, Taschen, Rucksäcke, Kopfbedeckungen, Helme, Schuhe, Handschuhe, oder ähnliches integriert oder an oder in diesen Kleidungsstücken oder Ausstattungsgegenständen angebracht sind. Unterschiedliche Bestandteile der erfindungsgemäßen Anordnung können dabei in unterschiedlicher Weise auf der Körperoberfläche oder in oder auf unterschiedlichen Kleidungsstücken oder Ausstattungsgegenständen angebracht oder in diese integriert sein.

Mit der Ausdrucksweise "von der Antenne (Ant) ausgehend" soll zum Ausdruck gebracht werden, dass die linienhafte oder kettenartige, aber nicht notwendig geradlinige Anordnung (K) von Materialien den Verlauf der Feldlinien so beeinflusst, dass eine Führung der Felder oder Wellen zwischen dem Sender zum Empfänger ermöglicht wird. Das bedeutet nicht unbedingt, dass diese Anordnung (K) mit der Antenne (Ant) verbunden, also z.B. mechanisch oder gar galvanisch verbunden, sein müsste. Es sollen vielmehr durch diese Ausdrucksweise auch und gerade solche Anordnungen mit erfasst werden, bei denen dies nicht der Fall ist, bei welchen die Anordnung (K) also nur durch ihre räumliche Lage und bzw. oder insbesondere durch die Nähe ihrer Endpunkte zu der Antenne (Ant) und bzw. oder zu den Empfangsantennen (AntR) zur Beeinflussung der Felder oder Wellen im Sinne der Aufgabe, die der Erfindung zugrunde liegt, geeignet ist.

Unter Signalen sollen im Zusammenhang mit der Darstellung der vorliegenden Erfindung alle Arten von Signalen im Sinne der Nachrichtentechnik und Informationstechnik verstanden werden, also insbesondere Steuersignale, Programmiersignale, Audiosignale oder andere Signale, je nach der Zielanwendung und dem Technikgebiet, in dem die Erfindung Anwendung finden soll. Dabei kann sich nur aus dem Anwendungszusammenhang näher ergeben, in welcher Form (analog, digital, Kodierung, Modulation, etc.) diese Signale durch den verwendeten elektromagnetischen Träger dargestellt werden.

Diese Signale werden in der erfindungsgemäßen Anordnung zwischen dem ersten und einem zweiten Gerät jedenfalls über elektromagnetische Felder oder Wellen übertragen. Diese Ausdrucksweise soll ausdrücklich Radiowellen aber auch andere Formen der elektromagnetischen Übertragung, wie beispielsweise eine induktive oder kapazitive Kopplung, deren technische Abwandlungen und Weiterentwicklungen und allgemeiner jedes elektromagnetische Übertragungsverfahren einschließen, bei dem mit Hilfe eines Senders und einer Antenne Signale über elektromagnetische Felder oder Wellen übertragen werden. Der Begriff der Antenne soll in diesem Zusammenhang nicht nur Antennen im engeren Sinne sondern auch Spulen und überhaupt jede Leiteranordnung umfassen, die zur Abstrahlung von elektromagnetischen Feldern in den Raum oder zur induktiven oder kapazitiven Kopplung oder für andere Formen der elektromagnetischen Übertragung geeignet sind.

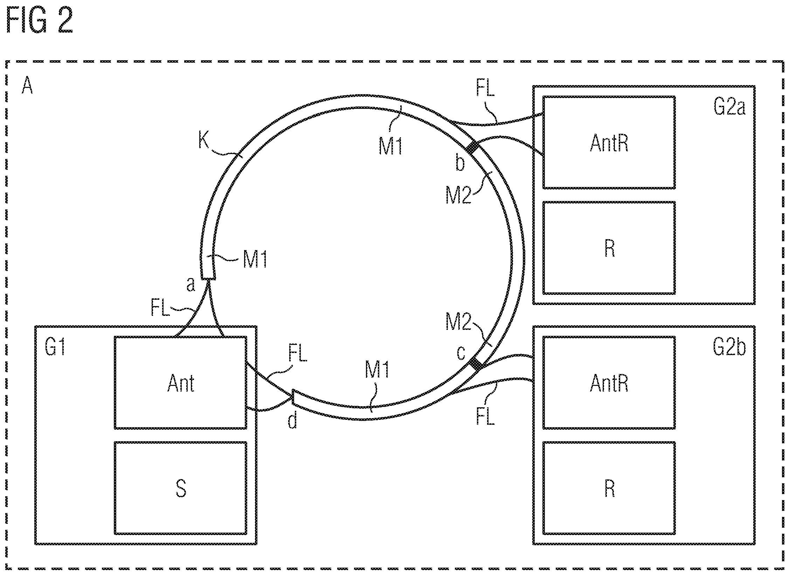

Das zweite Gerät (G2) verfügt zweckmäßig über einen Empfänger (R) und eine Antenne (AntR), die zur Einkopplung der Feldlinien (FL) in den Empfänger (R) dient. Entsprechendes gilt für die zweiten Geräte (G2a, G2b) der Figur 2.

Um die zur Übertragung der Signale verwendeten elektromagnetischen Wellen oder Felder zwischen Sender und Empfänger zu führen, und so eine optimale Signalgüte (charakterisiert beispielsweise durch das Signal-zu-Störverhältnis oder eine ähnliche Größe) am Empfänger zu erreichen, sieht die Erfindung eine von der Antenne (Ant) ausgehende linienhafte oder kettenartige, aber nicht notwendig geradlinige Anordnung (K) von Materialien vor, die den Verlauf der von der Antenne (Ant) ausgesendeten oder erzeugten elektromagnetischen Wellen oder Felder so beeinflussen, dass am Ort wenigstens eines zweiten Gerätes (G2) eine höhere Empfangsfeldstärke der vom Sender (S) ausgesendeten Signale herrscht als ohne diese Anordnung (K) von Materialien.

Die in Figur 1 schematisch dargestellte Ausführungsbeispiel Anordnung (A) von Geräten zeigt ein Beispiel einer solchen Anordnung (K) von Materialien, die hier als Aneinanderreihung von Anordnungselementen (AE) ausgeführt ist. Sofern diese Anordnungselementen (AE) wenigstens zum Teil aus ferromagnetischem Material bestehen, werden die an der Antenne (Ant) austretenden magnetischen Feldlinien (FL) aufgrund der elektrodynamischen Eigenschaften ferromagnetischer Materialien durch diese Anordnungselemente (AE) gebündelt und längs der linienhaften oder kettenartigen Anordnung (K) zu der Antenne (AntR) geführt. Denn wegen der hohen Permeabilität ferromagnetischer Materialien verlaufen die Feldlinien der magnetischen Induktion innerhalb dieser Materialien erheblich dichter als in Luft. Mann spricht deshalb auch von einer Konzentration der magnetischen Induktionslinien innerhalb eines ferromagnetischen Materials. Diesen Effekt macht sich diese Gruppe von Ausführungsbeispielen der vorliegenden Erfindung zunutze, um die zur Übertragung der Signale dienenden Felder vom Sender zum Empfänger zu führen und so die am Empfänger herrschende Feldstärke zu erhöhen.

Eine vorteilhafte Ausführungsform ist eine Anordnung (A) von Geräten gemäß Figur 1 mit einer Anordnung (K) von Materialien die als Aneinanderreihung von Anordnungselementen (AE) ausgeführt ist, wobei diese Anordnungselemente (AE) in zylindrischer Form ausgestaltet sind, die mit einem Gewebe umgeben und zu einer linienhaften oder kettenartigen, aber nicht notwendig geradlinigen Anordnung von Antennenelementen miteinander verklebt sind. Durch diese Konstruktion lässt sich eine leicht in Kleidungsstücke oder Ausstattungsgegenstände integrierbare Anordnung (K) realisieren, die zur Führung des Feldes zwischen Sender und Empfänger geeignet ist. Wegen ihrer mechanischen Flexibilität ist diese Anordnung am Körper eines Menschen bequem tragbar, ohne Einschränkungen bei der Beweglichkeit zu verursachen.

Dazu alternativ oder in Kombination mit anderen Ausführungsformen kann man eine Anordnung (A) von Geräten gemäß Figur 2 verwenden, mit einer Anordnung (K) von Materialien die ganz oder teilweise in Form eines flexiblen Schlauchs ausgeführt ist, der teilweise mit ferromagnetischem Pulver, Granulat, oder ähnlichem ferromagnetischem Material (M1) gefüllt ist und zum anderen Teil mit entsprechendem nicht magnetischem Material (M2).

Wie in Figur 2 schematisch dargestellt, treten die Feldlinien (FL) am einen Ende (a) des Schlauchs in das darin befindliche ferromagnetische Material (M1) ein, konzentrieren sich hierdurch und werden deshalb bis zum Punkt (b) geführt, an dem sie wieder austreten um durch die Empfangsantenne (AntR) des oberen zweiten Gerätes (G2a) aufgenommen werden können. Zwischen den Punkten (b) und (c) ist der Schlauch in diesem Ausführungsbeispiel nicht mit einem Ferromagnetikum gefüllt, sondern mit einem magnetisch passiven Material (M2). Entsprechendes gilt für die Punkte (d) und (c) des Schlauchs, zwischen denen sich in diesem Beispiel ebenfalls ein ferromagnetisches Material befindet. Dieser Abschnitt versorgt die Antenne (AntR) des unteren zweiten Geräts (G2b). Da das Material (M2) nicht magnetisch ist, werden die Feldlinien nicht kurzgeschlossen.

Die in dieser Beschreibung beispielhaft dargestellten Ausführungsformen können auch miteinander kombiniert werden, so dass die Anordnung (K) auch aus einer Kombination von Ketten und Schläuchen oder anderen Ausführungsformen bestehen kann. Solche Kombinationen bieten sich insbesondere dann an, wenn die linienhafte oder kettenartige, aber nicht notwendig geradlinige Anordnung (K) von Materialien eine baumartige Topologie besitzt, oder mit anderen Worten, eine verzweigte Struktur. Solche verzeigten Strukturen sind insbesondere dann vorteilhaft, wenn eine Mehrzahl von nicht zu dicht beieinander befindlichen Geräten mit Signalen versorgt werden soll. In einigen Situationen kann auch eine Anordnung (A) von Geräten Vorteile haben, die - ganz oder teilweise - mit einer Anordnung (K) von Materialien ausgestattet ist, die teilweise mit einer Metallbeschichtung versehenen sind. Diese Variante wird insbesondere in Hochfrequenz-Funksystemen vorteilhaft sein.

In vielen Fällen wird eine Anordnung (A) von Geräten besonders vorteilhaft sein, die mit einer Anordnung (K) von Materialien ausgestattet ist, die in Form einer Kordel, Schlaufe, Gürtel, oder einer ähnlichen Einrichtung ausgestaltet ist, an der das erste Gerät (G1) am menschlichen Körper getragen werden kann. Dabei wird sich die Antenne (Ant) oder z.B. die Sendespule (Ant) des Gerätes (G1), das z.B. ein Programmiergerät sein kann, im oberen Teil dieses Geräts befinden, wo auch die Kordel - oder allgemeiner, die Anordnung (K) - befestigt wird. Die Kordel, Halsschlaufe, oder ähnliches kann nun partiell aus ferromagnetischem Material ausgeführt werden, und so das magnetische Streufeld der Spule zu den zweiten Geräten (G2a, G2b) leiten, die beispielsweise Hörgeräte sein können.

Bei vielen praktischen Anwendungen wird es vorteilhaft sein, wenn die Anordnung (K) von Materialien angeordnet oder angepasst wird, dass der Antennenschwingkreis (ASK) der Antenne (Ant) des ersten Gerätes (G1) nicht merklich verstimmt wird und gleichzeitig eine möglichst wirksame Koppelung der Anordnung (K) an die zu beeinflussenden elektromagnetischen Wellen oder Felder erreicht wird. Bei einer Übertragung mittels magnetischer Felder kann beispielsweise eine Kordel (K) links und rechts jeweils nahe am Antennenaustritt der Ferritantenne (Ant) oder Luftspule (Ant) angebracht werden. Der Abstand sollte groß genug sein, um den üblicherweise benutzten Antennenschwingkreis nicht merklich zu verstimmen aber nicht zu groß, also noch nahe genug, um noch ausreichend viele Feldlinien mit dem Leiter aufzufangen. Ein typischer Abstand könnte, abhängig vom System und von der Sendefrequenz, 3 bis 5 cm, aber fallweise auch weniger oder mehr, betragen. Mit Vorteil wird die Anordnung (K) von Materialien so angeordnet oder angepasst, dass die Feldlinien der beeinflussten elektromagnetischen Wellen oder Felder möglichst nahe an einer Empfangseinrichtung wenigstens eines zweiten Gerätes (G2) austreten. Bei den beschriebenen Beispielen bedeutet dies, dass die Teile der Anordnung (K), die mit einem ferromagnetischen Material ausgestattet sind, möglichst nahe an den Empfangsspulen (AntR) der zweiten Geräte (G2a, G2b) enden sollten, wobei die Kordel (K) nicht komplett aus ferromagnetischem Material bestehen sollte, um ein Kurzschließen der Feldlinien zu vermeiden.
Schließlich ist es vorteilhaft, wenn die Anordnung (K) von Materialien so angeordnet oder angepasst wird, dass die magnetischen Feldlinien der beeinflussten elektromagnetischen Wellen oder Felder möglichst optimal auf wenigstens eine Empfangsspule wenigstens eines zweiten Gerätes (G2) ausgerichtet austreten. Dies lässt sich beispielsweise erreichen, wenn die Stelle der Anordnung (K), an der das ferromagnetische Material endet, in einer Weise geformt ist, dass die Feldlinien (FL) so austreten, dass das entstehende magnetische Feld möglichst gut auf die Empfangsspulen (AntR) ausgerichtet ist. Die konkrete Lage dieser Stelle - und gegebenenfalls ihre besonders angepasste Form - hängen hierbei von der Lage der Empfangsspulen (AntR) ab und kann im Einzelfall durch Messungen - beispielsweise beim Hörgeräteakustiker - optimiert werden.

Die in einigen Beispielen erwähnte Kordel oder Halsschlaufe oder eine ähnliche Anordnung (K) mit ferromagnetischem Material kann z.B. folgendermaßen hergestellt werden:
- Das Material könnte in Form von Kettengliedern vorliegen aus denen dann eine zusammenhängende aber bewegliche Kette realisiert wird. Ein Teil der Kettenglieder ist dabei aus ferromagnetischem Material und ein Teil aus magnetisch neutralem Material.
- Es könnte auch ein flexibler Schlauch verwendet werden, der beispielsweise mit ferromagnetischem Pulver gefüllt wird und teilweise mit nichtmagnetischem Pulver.
- Es könnten kleine zylindrische Ferrite verwendet werden und kleine nichtmagnetische Zylinder und diese Teile können mit einem Gewebe umgeben und flexible verklebt werden.

Die spezielle Wahl des Materials der Kordel oder Halsschlaufe - in Abstimmung auf das eingesetzte Funksystem - erlaubt eine Führung des elektromagnetischen Feldes, welches die Datenübertragung zwischen den Hörgeräten und dem um den Hals getragenen Gerät ermöglicht. Hierdurch wird die Signalqualität verbessert. Somit sinkt die Fehlerrate auf dem Kanal und die Nutzdatenrate steigt. Die Auswirkungen von störenden Umwelteinflüssen, wie z.B. von Störfeldern, Metallflächen, etc.) werden ebenfalls verringert. Auch kann hierdurch die Reichweite zwischen Sender und Empfänger vergrößert werden.

## Patentansprüche

1. Am Körper eines Menschen tragbare Anordnung (A) von Geräten mit einem ersten Gerät (G1) zum Senden von Signalen an wenigstens ein zweites Gerät (G2) über elektromagnetische Felder oder Wellen, wobei das erste Gerät (G1) einen Sender (S) zum Senden von solchen Signalen und eine mit diesem Sender (S) verbundene erste Antenne (Ant) umfasst und wobei das zweite Gerät über einen Empfänger (R) und eine zweite Antenne (AntR) verfügt, die zur Einkopplung der Feldlinien (FL) in den Empfänger (R) dient,
mit einer von der ersten Antenne (Ant) ausgehenden linienhaften oder kettenartigen, aber nicht notwendig geradlinigen Anordnung (K) von Materialien, die den Verlauf der von der ersten Antenne (Ant) ausgesendeten oder erzeugten elektromagnetischen Wellen oder Felder so beeinflussen, dass am Ort wenigstens des zweiten Gerätes (G2) eine höhere Empfangsfeldstärke der vom Sender (S) ausgesendeten Signale herrscht als ohne diese Anordnung (K) von Materialien, wobei die Anordnung (K) von Materialien als Aneinanderreihung von Anordnungselementen (AE) ausgeführt ist, die wenigstens zum Teil aus ferromagnetischem Material bestehen.

2. Anordnung (A) von Geräten nach Anspruch 1, mit einer Anordnung (K) von Materialien, die als Aneinanderreihung von Anordnungselementen (AE) ausgeführt ist, wobei diese Anordnungselemente (AE) in zylindrischer Form ausgestaltet sind, die mit einem Gewebe umgeben und zu einer linienhaften oder kettenartigen, aber nicht notwendig geradlinigen Anordnung von Antennenelementen miteinander verklebt sind.

3. Anordnung (A) von Geräten nach einem der vorhergehenden Ansprüche, mit einer Anordnung (K) von Materialien, die ganz oder teilweise in Form eines flexiblen Schlauchs ausgeführt ist, der teilweise mit ferromagnetischem Pulver, Granulat, oder ähnlichem ferromagnetischem Material gefüllt ist und zum anderen Teil mit entsprechendem nichtmagnetischem Material.

4. Anordnung (A) von Geräten nach einem der vorhergehenden Ansprüche, mit einer Anordnung (K) von Materialien, die teilweise mit einer Metallbeschichtung versehenen sind.

5. Anordnung (A) von Geräten nach einem der vorhergehenden Ansprüche, mit einer Anordnung (K) von Materialien, die in Form einer Kordel, Schlaufe, Gürtel, oder einer ähnlichen Einrichtung ausgestaltet ist, an der das erste Gerät (G1) am menschlichen Körper getragen werden kann.

6. Verfahren zur Verbesserung der Empfangsfeldstärke am Ort wenigstens eines zweiten Gerätes (G2) einer Anordnung (A) nach einem der Ansprüche 1 bis 5, bei dem eine von der ersten Antenne (Ant) dieser Anordnung (A) ausgehende linienhafte oder kettenartige, aber nicht notwendig geradlinige Anordnung (K) von Materialien so angeordnet oder angepasst wird, dass diese Materialien den Verlauf der von der ersten Antenne (Ant) ausgesendeten oder erzeugten elektromagnetischen Wellen oder Felder so beeinflussen, dass am Ort wenigstens eines zweiten Gerätes (G2) eine höhere Empfangsfeldstärke der vom Sender (S) ausgesendeten Signale herrscht als ohne diese Anordnung (K) von Materialien.

7. Verfahren nach Anspruch 6, bei dem die Anordnung (K) von Materialien so angeordnet oder angepasst wird, dass der Antennenschwingkreis (ASK) der ersten Antenne (Ant) des ersten Gerätes (G1) nicht merklich verstimmt wird und gleichzeitig eine möglichst wirksame Koppelung der Anordnung (K) an die zu beeinflussenden elektromagnetischen Wellen oder Felder erreicht wird, indem die Anordnung (K) links und rechts nahe am Antennenaustritt der ersten Antenne (Ant) angebracht wird, wobei die erste Antenne (Ant) eine Ferritantenne oder eine Luftspule ist.

8. Verfahren nach einem der vorhergehenden Verfahrensansprüche, bei dem die Anordnung (K) von Materialien so angeordnet oder angepasst wird, dass die Feldlinien der beeinflussten elektromagnetischen Wellen oder Felder möglichst nahe an einer Empfangseinrichtung des zweiten Gerätes (G2) austreten, indem Teile der Anordnung (K), die mit einem ferromagnetischen Material ausgestattet sind, möglichst nahe an der zweiten Antenne (AntR) des zweiten Geräts enden, wobei die Anordnung (K) nicht komplett aus ferromagnetischem Material besteht.

9. Verfahren nach einem der vorhergehenden Verfahrensansprüche, bei dem die Stelle der Anordnung (K), an der das ferromagnetische Material endet, in einer Weise geformt ist, dass die Feldlinien (FL) so austreten, dass das entstehende magnetische Feld möglichst gut auf die zweite Antenne (AntR) ausgerichtet ist.

## Claims

1. Arrangement (A) of devices that can be worn on the body of a person, comprising a first device (G1) for transmitting signals to at least one second device (G2) via electromagnetic fields or waves, wherein the first device (G1) comprises a transmitter (S) for transmitting such signals and a first antenna (Ant) connected to this transmitter (S), and wherein the second device has a receiver (R) and a second antenna (AntR), which is used to couple the field lines (FL) into the receiver (R),
comprising a linear or chain-like but not necessarily rectilinear arrangement (K) of materials, starting from the first antenna (Ant), which affect the course of the electromagnetic waves or fields transmitted or generated by the first antenna (Ant) such that a higher reception field strength of the signals transmitted by the transmitter (S) prevails at the location of at least the second device (G2) than without this arrangement (K) of materials, wherein the arrangement (K) of materials is implemented as a series of arrangement elements (AE) which, at least to some extent, consist of ferromagnetic material.

2. Arrangement (A) of devices according to Claim 1, comprising an arrangement (K) of materials which is implemented as a series of arrangement elements (AE), wherein these arrangement elements (AE) are configured in a cylindrical form, which are surrounded by a woven fabric and bonded to one another to form a linear or chain-like but not necessarily rectilinear arrangement of antenna elements.

3. Arrangement (A) of devices according to one of the preceding claims, comprising an arrangement (K) of materials which is wholly or partly implemented in the form of a flexible tube which is partly filled with ferromagnetic powder, granules or similar ferromagnetic material and the other part of which is filled with corresponding non-magnetic material.

4. Arrangement (A) of devices according to one of the preceding claims, comprising an arrangement (K) of materials which are partly provided with a metal coating.

5. Arrangement (A) of devices according to one of the preceding claims, comprising an arrangement (K) of materials which is configured in the form of a cord, strap, belt or a similar device, on which the first device (G1) can be worn on the human body.

6. Method for improving the reception field strength at the location of at least one second device (G2) of an arrangement (A) according to one of Claims 1 to 5, in which a linear or chain-like but not necessarily rectilinear arrangement (K) of materials, starting from the first antenna (Ant) of this arrangement (A), is arranged or adapted such that these materials affect the course of the electromagnetic waves or fields transmitted or generated by the first antenna (Ant) such that a higher reception field strength of the signals transmitted by the transmitter (S) prevails at the location of at least one second device (G2) than without this arrangement (K) of materials.

7. Method according to Claim 6, in which the arrangement (K) of materials is arranged or adapted such that the antenna tuned circuit (ASK) of the first antenna (Ant) of the first device (G1) is not noticeably detuned and, at the same time, the most effective possible coupling of the arrangement (K) to the electromagnetic waves or fields to be affected is achieved, in that the arrangement (K) is fitted on the left and right close to the antenna outlet of the first antenna (Ant), wherein the first antenna (Ant) is a ferrite antenna or an air-core coil.

8. Method according to one of the preceding method claims, in which the arrangement (K) of materials is arranged or adapted such that the field lines of the affected electromagnetic waves or fields emerge as close as possible to a receiving device of the second device (G2), in that parts of the arrangement (K) which are equipped with a ferromagnetic material end as close as possible to the second antenna (AntR) of the second device, wherein the arrangement (K) does not consist completely of ferromagnetic material.

9. Method according to one of the preceding method claims, in which the location of the arrangement (K) at which the ferromagnetic material ends is shaped in such a way that the field lines (FL) emerge in such a way that the magnetic field that arises is aligned as well as possible with the second antenna (AntR).

## Revendications

1. Arrangement (A) d'appareils portable sur le corps d'un être humain, comprenant un premier appareil (G1) destiné à émettre des signaux à au moins un deuxième appareil (G2) par le biais de champs ou d'ondes électromagnétiques, le premier appareil (G1) comportant un émetteur (S) destiné à émettre de tels signaux et une première antenne (Ant) reliée à cet émetteur (S) et le deuxième appareil disposant d'un récepteur (R) et d'une deuxième antenne (AntR) qui sert à coupler les lignes de champ (FL) dans le récepteur (R),
comprenant un arrangement (K) linéaire ou en chaîne, mais pas nécessairement rectiligne, de matériaux, qui sortent de la première antenne (Ant), qui influencent le tracé des ondes ou des champs électromagnétiques émises ou générées par la première antenne (Ant) de telle sorte qu'une intensité de champ de réception des signaux émis par l'émetteur (S) qui règne à l'endroit d'au moins le deuxième appareil (G2) est plus élevée qu'en l'absence de cet arrangement (K) de matériaux, l'arrangement (K) de matériaux étant réalisé sous la forme d'une juxtaposition d'éléments d'arrangement (AE) qui se composent au moins partiellement de matériau ferromagnétique.

2. Arrangement (A) d'appareils selon la revendication 1, comprenant un arrangement (K) de matériaux qui est réalisé sous la forme d'une juxtaposition d'éléments d'arrangement (AE), ces éléments d'arrangement (AE) étant de configuration cylindrique, lesquels sont entourés d'une toile et collés les uns aux autres en un arrangement linéaire ou en chaîne, mais pas nécessairement rectiligne, d'éléments d'antenne.

3. Arrangement (A) d'appareils selon l'une des revendications précédentes, comprenant un arrangement (K) de matériaux qui est réalisé entièrement ou partiellement sous la forme d'un tuyau flexible, lequel est partiellement rempli de poudre ou de granulés ferromagnétiques ou d'un matériau ferromagnétique similaire et, dans l'autre partie, de matériau non magnétique correspondant.

4. Arrangement (A) d'appareils selon l'une des revendications précédentes, comprenant un arrangement (K) de matériaux qui sont partiellement munis d'un revêtement métallique.

5. Arrangement (A) d'appareils selon l'une des revendications précédentes, comprenant un arrangement (K) de matériaux qui est réalisé sous la forme d'une cordelette, d'une boucle, d'une ceinture ou d'un dispositif similaire au niveau duquel le premier appareil (G1) peut être porté sur le corps humain.

6. Procédé d'amélioration de l'intensité du champ de réception à l'endroit d'au moins un deuxième appareil (G2) d'un arrangement (A) selon l'une des revendications 1 à 5, procédé selon lequel un arrangement (K) linéaire ou en chaîne, mais pas nécessairement rectiligne, de matériaux qui sortent de le première antenne (Ant) de cet arrangement (A) est disposé ou adapté de telle sorte que ces matériaux influencent le tracé des ondes ou des champs électromagnétiques émis ou générés par la première antenne (Ant) de telle sorte qu'une intensité de champ de réception des signaux émis par l'émetteur (S) qui règne à l'endroit d'au moins un deuxième appareil (G2) est plus élevée qu'en l'absence de cet arrangement (K) de matériaux.

7. Procédé selon la revendication 6, selon lequel l'arrangement (K) de matériaux est disposé ou adapté de telle sorte que le circuit oscillant d'antenne (ASK) de la première antenne (Ant) du premier appareil (G1) n'est pas désaccorder de manière remarquable et un couplage le plus efficace possible de l'arrangement (K) aux ondes ou aux champs électromagnétiques à influencer est obtenu simultanément en ce que l'arrangement (K) est monté à gauche et à droite à proximité de la sortie d'antenne de la première antenne (Ant), la première antenne (Ant) étant une antenne en ferrite ou une bobine à air.

8. Procédé selon l'une des revendications précédentes, selon lequel l'arrangement (K) de matériaux est disposé ou adapté de telle sorte que les lignes de champ des ondes ou des champs électromagnétiques influencés sortent le plus près possible d'un dispositif de réception du deuxième appareil (G2) en ce que des parties de l'arrangement (K) qui sont équipées d'un matériau ferromagnétique se terminent le plus près possible de la deuxième antenne (AntR) du deuxième appareil, l'arrangement (K) ne se composant pas entièrement de matériau ferromagnétique.

9. Procédé selon l'une des revendications précédentes, selon lequel l'emplacement de l'arrangement (K) au niveau duquel se termine le matériau ferromagnétique est façonné d'une manière telle que les lignes de champ (FL) émanent de telle sorte que le champ magnétique produit est orienté le mieux possible sur la deuxième antenne (AntR).
